(19) Europäisches Patentamt
European Patent Office
Office européen des brevets

(11) Veröffentlichungsnummer: **0 000 737**
**B1**

(12) # EUROPÄISCHE PATENTSCHRIFT

(45) Veröffentlichungstag der Patentschrift: **29.04.81**

(51) Int. Cl.³: **C 09 B 29/32, C 08 K 5/34**

(21) Anmeldenummer: **78100516.0**

(22) Anmeldetag: **27.07.78**

(54) **Monoazopigmente der Acetoacetylaminobenzimidazolonreihe, Verfahren zu deren Herstellung, und deren Verwendung zum Pigmentieren von hochmolekularem organischem Material.**

(30) Priorität: **04.08.77 CH 9581/77**

(43) Veröffentlichungstag der Anmeldung:
**21.02.79 Patentblatt 79/4**

(45) Bekanntmachung des Hinweises auf die Patenterteilung:
**29.04.81 Patentblatt 81/17**

(84) Benannte Vertragsstaaten:
**CH DE FR GB NL**

(56) Entgegenhaltungen:
**FR - A - 2 128 514**
**FR - A - 2 167 629**
**FR - A - 2 233 373**
**FR - A - 2 370 082**

(73) Patentinhaber: **CIBA-GEIGY AG**
**Patentabteilung Postfach**
**CH-4002 Basel (CH)**

(72) Erfinder: **Müller, Rolf**
**Herrenweg 77**
**CH-4147 Aesch (CH)**

**EP 0 000 737 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Monoazopigmente der Acetoacetylaminobenzimidazolonreihe, Verfahren zu deren Herstellung und deren Verwendung zum Pigmentieren von hochmolekularem organischem Material

Gegenstand der Erfindung sind neue Monoazopigmente auf Basis von mit Acetomethylaminobenzimidazolon gekuppelten heterocyclischen Diazokomponenten.

In der französischen Patentpublikation 2.128.514 sind bereits Monoazopigmente beschrieben, die durch Kupplung der diazotierten Amine von insbesondere Benzoxazolonen und Benzimidazolonen mit Acetoacetylamino-benzimidazolonen, die an einem Stickstoffatom durch eine Alkyl-, Cycloalkyl- oder Arylgruppe substituiert sind, hergestellt werden. Die erhaltenen Azopigmente weisen jedoch eine geringe Lichtechtheit auf, so dass sie für die Pigmentierung von hochmolekularem organischem Material wenig geeignet sind.

Es wurde nun gefunden, dass Azopigmente, welche die gleiche Diazokomponente aufweisen, aber mit Acetoacetylaminobenzimidazolonen gekuppelt sind, deren Stickstoffatome unsubstituiert sind, ausgezeichnet lichtecht sind.

Acetoacetylamino-benzimidazolone mit unsubstituierten Stickstoffatomen als Kupplungskomponente sind bereits aus den französischen Patentpublikationen 2.167.629 und 2.233.373 bekannt, jedoch in Kombination mit anderen heterocyclischen Diazokomponenten, die sich von den Diazokomponenten der neuen Monoazopigmente strukturell unterscheiden.

Die neuen Azopigmente entsprechen der Formel

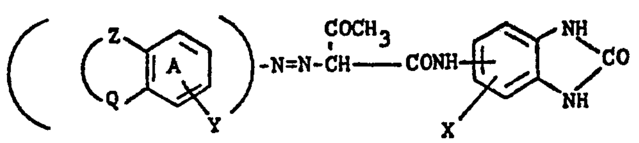
(1)

worin X und Y Wasserstoff, Halogen, Alkyl oder Alkoxy mit 1 bis 4 C-Atomen, Q eine Gruppe der Formeln —CONH— oder —NHCO— und Z ein O-Atom oder eine Gruppe der Formeln —NR—, —NHCO—, —CONH—, —CH=H— oder

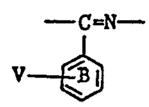

darstellen, wobei R Wasserstoff, Alkyl mit 1—4 C-Atomen oder gegebenenfalls durch Halogen, Alkyl oder Alkoxy mit 1—4 C-Atomen substituiertes Phenyl und V Wasserstoff, Halogen, Alkyl oder Alkoxy mit 1—4 C-Atomen bedeuten und die Azogruppe an die Phenylreste A oder B gebunden ist. Sie werden dadurch hergestellt, dass man die Diazoverbindung eines Amins der Formel

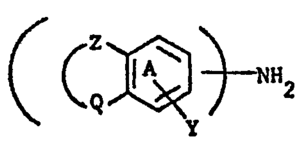
(2)

mit einem Acetessigarylid der Formel

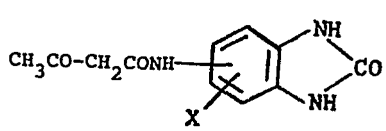
(3)

kuppelt.

Bevorzugt sind jene Verbindungen der Formel (1), worin Q eine Gruppe der Formel —CONH— und Z ein O-Atom oder eine Gruppe der Formel —CONH— und Z ein O-Atom oder eine Gruppe der Formeln —NH— oder —NHCO— bedeuten. X ist dabei vorzugsweise Wasserstoff, Chlor, Methyl oder Methoxy und Y Wasserstoff, Chlor, Methyl, Methoxy oder Aethoxy.

Von besonderem Interesse sind Verbindungen der Formeln

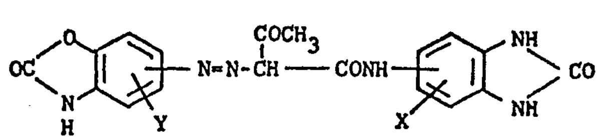
(4)

und insbesondere solche der Formel

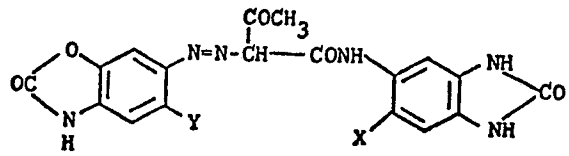

(5)

Als Beispiele für (Amine, deren Diazoverbindungen verwendet werden und) in denen Q, Y und Z die oben angegebene Bedeutung haben, seien die folgenden genannt:

1. Aminobenzoxazolone der Formel

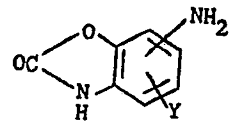

(6)

2. Aminobenzimidazolone der Formel

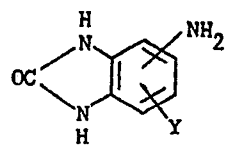

(7)

3. Aminochinazolin-2,4-dione der Formel

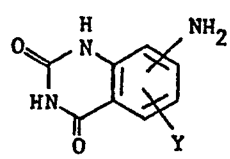

(8)

4. Aminochinoxalin-2,3-dione der Formel

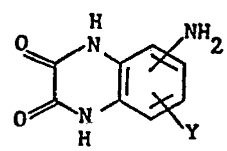

(9)

5. Aminochinazolin-4-one der Formel

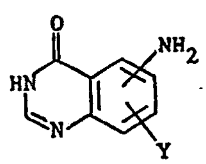

(10)

6. 2-(Aminophenyl)chinazolin-4-one der Formel

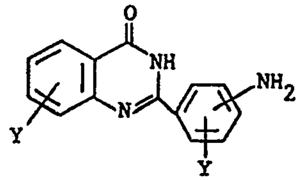

(11)

Als Beispiele für die vorstehenden Amine seien, nach den oben erwähnten Gruppen geordnet, die folgenden genannt:

1) 5-Aminobenzoxazolon
6-Aminobenzoxazolon
5-Amino-6-chlor-benzoxazolon
5-Amino-7-chlor-benzoxazolon
5-Amino-6-methyl-benzoxazolon
5-Amino-7-methyl-benzoxazolon
5-Amino-6-methoxy-benzoxazolon
6-Amino-benzoxazolon
6-Amino-5-chlorbenzoxazolon
6-Amino-5-methyl-benzoxazolon

2) 5-Amino-benzimidazolon
5-Amino-6-chlor-benzimidazolon
5-Amino-7-chlor-benzimidazolon
5-Amino-6-methyl-benzimidazolon
5-Amino-7-methyl-benzimidazolon
5-Amino-6-äthoxy-benzimidazolon

3) 6-Aminochinazolin-2,4-dion
7-Aminochinazolin-2,4-dion

4) 6-Aminochinoxalin-2,3-dion
7-Aminochinoxalin-2,3-dion

5) 6-Aminochinazolin-4-on
7-Aminochinazolin-4-on
5-Amino-6-chlorchinazolin-4-on

6) 2-(3′-Amino-4′-methoxyphenyl)-chinazolin-4-on
2-(3′-Amino-4′-chlorphenyl)-6-chlorchinazolin-4-on
2-(4′-Amino-3′-methylphenyl)-chinazolin-4-on
2-(3′-Amino-4′-methylphenyl)-chinazolin-4-on
2-(3′-Amino-4′-chlorphenyl)-chinazolin-4-on

Als Kupplungskomponenten verwendet man vorzugsweise Acetessigarylide der Formel

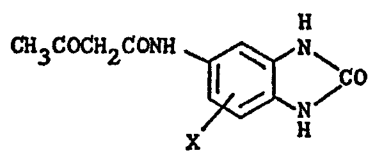

(12)

worin X die oben angegebene Bedeutung hat.

Die als Kupplungskomponente zu verwendenden Acetessigarylide erhält man beispielsweise durch Anlagerung von Diketen an die entsprechenden Aminobenzimidazolone.

Die Kupplung wird zweckmässig durch allmähliche Vereinigung der wässrig-alkalischen Lösung der Kupplungskomponente mit der sauren Lösung des Diazoniumsalzes, vorzugsweise bei einem pH-Wert von 4 bis 6, durchgeführt.

Der pH-Wert wird vorteilhaft durch Zugabe eines Puffers eingestellt. Als Puffer kommen z.B. die Salze, insbesondere Alkalisalze, der Ameisensäure, Phosphorsäure oder insbesondere der Essigsäure in Betracht. Die alkalische Lösung der Kupplungskomponente enthält zweckmässig ein Netz-, Dispergier- oder Emulgiermittel, beispielsweise ein Aralkylsulfonat, wie Dodecylbenzolsulfonat oder das Natriumsalz der 1,1′-Dinaphthylmethansulfonsäure, Polykondensationsprodukte von Alkylenoxyden, wie das Einwirkungsprodukt von Aethylenoxyd auf p-tert.-Octylphenol, ferner Alkylester von Sulforicinoleaten, beispielsweise n-Butylsulforicinoleat. Die Dispersion der Kupplungskomponente kann auch vorteilhaft Schutzkolloide, beispielsweise Methylcellulose oder kleinere Mengen inerter, in Wasser schwerlöslicher oder unlöslicher organischer Lösungsmittel enthalten, beispielsweise gegebenenfalls halogenierte oder nitrierte aromatische Kohlenwasserstoffe, wie Benzol, Toluol, Xylol, Chlorbenzol, Dichlorbenzole oder Nitrobenzol, sowie aliphatische Halogenkohlenwasserstoffe wie z.B. Tetrachlorkohlenstoff oder Trichloräthylen, ferner mit Wasser mischbare organische Lösungsmittel, wie Aceton, Methyläthylketon, Methanol, Aethanol oder Isopropanol, insbesondere Dimethylformamid.

Man kann die Kupplung auch vorteilhaft in der Weise durchführen, dass man eine saure Lösung des Diazoniumsalzes mit einer alkalischen Lösung der Kupplungskomponente in einer Mischdüse

kontinuierlich vereinigt, wobei eine sofortige Kupplung der Komponenten erfolgt. Die entstandene Farbstoffdispersion wird der Mischdüse laufend entzogen und der Farbstoff durch Filtrieren abgetrennt.

Schliesslich kann die Kupplung auch so vollzogen werden, dass man das Amin mit der Kupplungskomponente im Molverhältnis 1:1 in einem organischen Lösungsmittel suspendiert und mit einem diazotierenden Mittel, insbesondere einem Ester der salpetrigen Säure, wie Methyl-, Aethyl-, Butyl-, Amyl oder Octylnitrit, behandelt.

Dank ihrer Unlöslichkeit können die erhaltenen Pigmente aus den Reaktionsgemischen durch Abfiltrieren isoliert werden.

Da die Nebenprodukte in Lösung bleiben, fallen die erhaltenen Pigmente in hervorragender Reinheit an.

Die erhaltenen Pigmente besitzen im allgemeinen eine gute Textur und können vielfach als Rohprodukte verwendet werden. Falls nötig oder erwünscht, kann man die Rohprodukte durch Mahlen oder Kneten in eine feindisperse Form überführen. Dabei werden zweckmässig Mahlhilfsmittel, wie anorganische und/oder organische Salze in Gegenwart oder Abwesenheit organischer Lösungsmittel verwendet. Nach dem Mahlen werden Hilfsmittel wie üblich entfernt, lösliche anorganische Salze z.B. mit Wasser und wasserunlösliche organische Hilfsmittel beispielsweise durch Wasserdampfdestillation. Auch durch Behandeln der Rohpigmente mit organischen Lösungsmitteln, vorzugsweise solchen, die über 100°C sieden, kann oft eine Verbesserung der Eigenschaften erreicht werden. Als besonders geeignet erweisen sich durch Halogenatome, Alkyl- oder Nitrogruppen substituierte Benzole, wie Xylole, Chlorbenzol, o-Dichlorbenzol oder Nitrobenzol sowie Pyridinbasen, wie Pyridin, Picolin oder Chinolin, ferner Ketone, wie Cyclohexanon, Aether, wie Aethylenglykolmonomethyl- oder monoäthyläther, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen durchführen.

Die Nachbehandlung erfolgt vorzugsweise durch Erhitzen des Pigmentes im Lösungsmittel auf 100 bis 150°C, wobie in vielen Fällen eine Kornvergröberung eintritt, was sich günstig auf die Licht- und Migrationsechtheit der erhaltenen Pigmente auswirkt.

Die neuen Farbstoffe stellen wertvolle, meist farbstarke Pigmente von guter Migrations-, Licht, Wetter- und Hitzeechtheit dar. Sie können einzeln oder in Mischungen in feinverteilter Form zum Pigmentieren von hochmolekularem organischen Material verwendet werden, z.B. von Celluloseäthern und -estern, Polyamiden, Polyurethanen, Polyestern, Acetylcellulose, Nitrocellulose, natürlichen Harzen oder Kunstharzen, wie Polymerisations- oder Kondensationsharzen, z.B. Aminoplasten, insbesondere Harnstoff- und Melamin-Formaldehydharzen, Alkydharzen, Phenoplasten, Polycarbonaten, Polyolefinen, wie Polystyrol, Polyvinylchlorid, Polyäthylen, Polypropylen, Polyacrylnitril, Polyacrylsäureester, Gummi, Casein, Silikon und Silikonharzen.

Dabei spielt es keine Rolle, ob die erwähnten hochmolekularen Verbindungen als plastische Massen, Schmelzen oder in Form von Spinnlösungen, Lacken oder Druckfarben vorliegen. Je nach Verwendungszweck erweist es sich als vorteilhaft, die neuen Pigmente als Toner oder in Form von Präparaten zu verwenden.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

## Beispiel 1

1,64 Teile 6-Amino-5-methyl-benzoxazolon werden unter Eiskühlung mit 2,5 Volumteilen 10-normaler Salzsäure und 2,5 Volumteilen 4-normaler Natriumnitritlösung in üblicher Weise diazotiert. Die Diazolösung wird klärfiltriert. 2,33 Teile 5-Acetoacetylamino-benzimidazolon werden in 130 Volumteilen Dimethylformamid bei 20°C gelöst. Nach Zugabe von 3 Teilen wasserfreiem Natriumacetat wird obige Diazolösung in ca. 15 Minuten zugetropft. Man rührt das Kupplungsgemisch noch einige Stunden bei Raumtemperatur nach, heizt dann auf 80°C, filtriert das gebildete Pigment ab, wäscht es mit heissem Wasser und anschliessend mit kaltem Isopropanol nach. Das Filtergut wird im Vakuum bei 70—80°C getrocknet. Man erhält 2,9 Teile (entsprechend 71% der Theorie) eines ockerfarbenen Pulvers der Formel

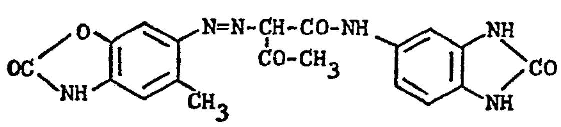

Durch Nachbehandlung in N-Methyl-2-pyrrolidon (30 Minuten bei Siedetemperatur) erfolgt eine Rekristallisation und man erhält ein Pigment, welches PVC in rotstichigem Gelbton von sehr guter Migrations-, Licht- und Wetterechtheit färbt. Die Herstellung von 6-Amino-5-methylbenzoxazolon erfolgt nach bekannten Verfahren, vorzugsweise aber analog der Herstellung von Benzimidazolonen, wie sie in der DE—OS 2 725 957 beschrieben ist.

In nachstehender Tabelle sind weitere Pigmente beschrieben, die durch Kuppeln der Diazoverbindung des in Kolonne I aufgeführten Amins mit der Acetoacetylverbindung des Amins der Kolonne II und anschliessender Nachbehandlung in dem in Kolonne IV angegebenen Lösungsmittel erhalten werden, wobei in Kolonne IV die Abkürzung NMP für N-Methyl-2-pyrrolidon und DMFA für Dimethylformamid stehen. Kolonne III gibt den Farbton der mit 0,2% dieser Pigmente gefärbten PVC-Folie an.

| Bsp. No. | I | II | III | IV |
|---|---|---|---|---|
| 2 | 6-Amino-5-chlor-benzoxazolon | 5-Aminobenzimidazolon | gelb | DMFA |
| 3 | 6-Amino-6-methoxybenzimidazolon | 5-Aminobenzimidazolon | gelb | DMFA |
| 4 | 6-Aminochinazolin-4-on | 5-Aminobenzimidazolon | grünstichiges gelb | DMFA |
| 5 | 7-Aminochinazolin-4-on | 5-Aminobenzimidazolon | gelb | NMP |
| 6 | 5-Amino-6-chlorchinazolin-4-on | 5-Aminobenzimidazolon | grünstichiges gelb | DMFA |
| 7 | 2-(3'-Amino-4'-methoxyphenyl)-chinazolin-4-on | 5-Aminobenzimidazolon | gelb | NMP |
| 8 | 2-(3'-Amino-4'-chlorphenyl)-6-chlorchinazolin-4-on | 5-Aminobenzimidazolon | gelb | NMP |
| 9 | 2-(4'-Amino-3'-methylphenyl)-chinazolin-4-on | 5-Aminobenzimidazolon | rotstichiges gelb | NMP |
| 10 | 2-(4'-Amino-4'-methylphenyl)-chinazolin-4-on | 5-Aminobenzimidazolon | gelb | NMP |
| 11 | 2-(3'-Amino-4'-chlorphenyl)-chinazolin-4-on | 5-Aminobenzimidazolon | rotstichiges gelb | NMP |
| 12 | 6-Amino-benzoxazolon | 5-Aminobenzimidazolon | gelb | DMFA |
| 13 | 6-Amino-benzoxazolon | 5-Amino-6-aethoxy-benzimidazolon | gelb | DMFA |
| 14 | 6-Amino-5-methyl-benzoxazolon | 5-Amino-6-methyl-benzimidazolon | gelb | DMFA |
| 15 | 6-Amino-chinazolin-2,4-dion | 5-Amino-6-chlor-benzimidazolon | rotstichiges gelb | NMP |
| 16 | 6-Amino-chinazolin-2,4-dion | 5-Amino-6-methoxy-benzimidazolon | orange | NMP |
| 17 | 7-Amino-chinazolin-2,4-dion | 5-Amino-6-chlor-benzimidazolon | gelb | NMP |

| Bsp. No. | I | II | III | IV |
|---|---|---|---|---|
| 18 | 7-Amino-chinazolin-2,4-dion | 5-Amino-6-methoxy-benzimidazolon | orange | DMFA |
| 19 | 6-Amino-chinoxalin-2,3-dion | 5-Amino-6-methoxy-benzimidazolon | rotstichiges gelb | NMP |
| 20 | 6-Amino-chinoxalin-2,3-dion | 5-Amino-6-äthoxy-benzimidazolon | rotstichiges gelb | DMFA |
| 21 | 7-Amino-chinazolin-4-on | 5-Amino-6-chlor-benzimidazolon | gelb | NMP |
| 22 | 2-(3'-Amino-4'-methylphenyl)chinazolin-4-on | 5-Amino-6-methyl-benzimidazolon | rotstichiges gelb | NMP |
| 23 | 2-(3'-Amino-4'-methylphenyl)chinazolin-4-on | 5-Amino-6-chlor-benzimidazolon | grünstichiges gelb | NMP |
| 24 | 2-(3'-Amino-4'-methylphenyl)-chinazolin-4-on | 5-Amino-6-methoxy-benzimidazolon | gelb | DMFA |
| 25 | 2-(3'-Amino-4'-methylphenyl)-chinazolin-4-on | 5-amino-äthoxy-benzimidazolon | gelb | DMFA |
| 26 | 2-(3'-Amino-4'-chlorphenyl)-chinazolin-4-on | 5-Amino-6-äthoxy-benzimidazolon | rotstichiges gelb | DMFA |
| 27 | 2-(3'-Amino-4'-chlorphenyl)-6-chlor-chinazolin-4-on | 5-Amino-6-methoxy-benzimidazolon | rotstichiges gelb | DMFA |
| 28 | 2-(3'-Amino-4'-chlorphenyl)-6-chlor-chinazolin-4-on | 5-Amino-6-äthoxy-benzimidazolon | gelb | DMFA |
| 29 | 2-(3'-Amino-4'-methoxyphenyl)-chinazolin-4-on | 5-Amino-6-chlor-benzimidazolon | grünstichiges gelb | DMFA |
| 30 | 1-Phenyl-5-amino-benzimidazolon | 5-Amino-benzimidazolon | gelb | DMFA |
| 31 | 5-Amino-6-methoxy-benzimidazolon | 5-Amino-benzimidazolon | rotstichiges gelb | DMFA |

Beispiel 32

3,26 Teile 5-Amino-6-methyl-benzimidazolon werden in 30 Vol-Teilen Wasser bei Raumtemperatur verrührt; nach ca. 5 Minuten versetzt man mit 5 Vol-Teilen konzentrierter Salzsäure. Die Suspension wird mit Eis auf 10°C gekühlt, während 15 Minuten bei 5 bis 8°C mit 5,1 Vol-Teilen 4-n-Natriumnitritlösung versetzt und anschliessend mit 30 Vol.-Teilen Eiswasser verdünnt. Nach ca. 1 Stunde Nachrühren bei 0 bis 5°C wird der Ueberschuss an Nitrit mit Sulfaminsäure beseitigt; anschliessend wird das Gemisch klärfiltriert. 4,66 Teile 5-Acetoacetylamino-benzimidazolon werden in 4 Vol.-Teilen 30%-iger Natronlauge und 70 Vol.-Teilen Wasser bei Raumtemperatur gelöst, mit 0,4 Teilen Kieselgur versetzt und das Reaktionsgemisch anschliessend klärfiltriert. In die Kupplungslösung werden 1,5 Vol.-Teile 30%-iger Salzsäure und dann noch 4 Teile Soda calz. zugegeben. Bei 15 bis 20°C wird in ca. 30 Minuten die Diazolösung zur Kupplungskomponente gegeben. Der pH-Wert fällt von 12,0 bis 4,4 nach beendeter Diazozugabe. Man lässt noch 6 bis 8 Stunden bei 20 bis 25°C nachrühren, heizt dann auf 90°C, filtriert das Pigment ab und wäscht mit heissem Wasser nach. Das Filtergut wird im Vakuum bei 70 bis 80°C getrocknet. Man erhält 8,13 Teile (entsprechend 100% der Theorie) eines orangebraunen pulverförmigen Pigmentes der Formel:

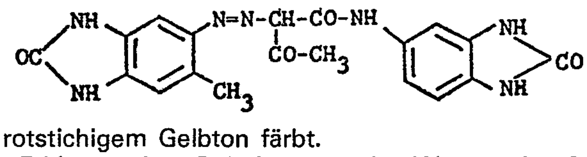

welches PVC in echtem rotstichigem Gelbton färbt.

Durch 6-stündiges Erhitzen des Rohpigments in Wasser in Gegenwart von 1% eines Kondensationsproduktes aus 1 Mol Oleylalkohol und 20 Mol Aethylenoxyd bei 150°C unter Druck werden die Echtheiten und die Textur des Pigments noch verbessert. Man erhält ein Pigment, welches PVC in rotstichigem Gelbton von sehr guter Migrations-, Licht- und Wetterechtheit färbt.

**Patentansprüche**

1. Azopigmente der Formel

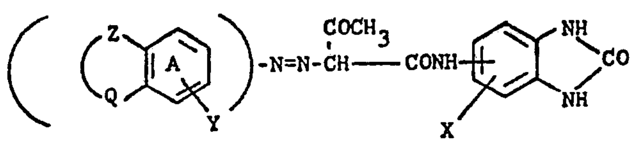

worin X und Y Wasserstoff, Halogen, Alkyl oder Alkoxy mit 1—4 C-Atomen, Q eine Gruppe der Formeln —CONH— oder —NHCO— und Z ein O-Atom oder eine Gruppe der Formeln —NR—, —NHCO—, —CONH—, —CH=N— oder

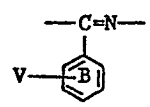

darstellen, wobei R Wasserstoff, Alkyl mit 1—4 C-Atomen oder gegebenenfalls durch Halogen, Alkyl oder Alkoxy mit 1—4 C-Atomen substituiertes Phenyl und V Wasserstoff, Halogen, Alkyl oder Alkoxy mit 1—4 C-Atomen bedeuten und die Azogruppe an die Phenylreste A oder B gebunden ist.

2. Azopigmente gemäss Anspruch 1 der Formel

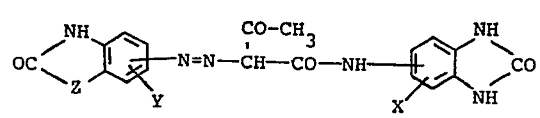

worin Z ein O-Atom oder eine Gruppe der Formeln —NH— oder —NHCO— bedeutet.

3. Azopigmente gemäss Anspruch 2, wobei in der angegebenen Formel X Wasserstoff, Chlor, Methyl oder Methoxy und Y Wasserstoff, Chlor, Methyl, Methoxy oder Aethoxy bedeuten.

4. Azopigmente gemäss Anspruch 3 der Formel

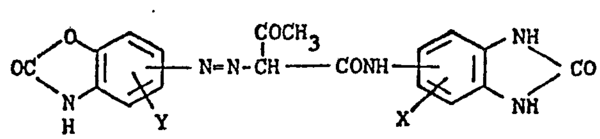

5. Azopigmente gemäss Anspruch 3 der Formel

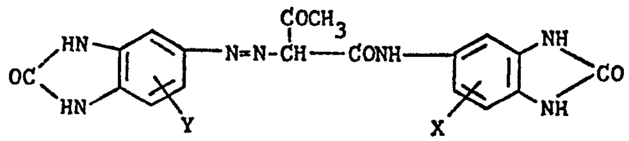

6. Azopigmente gemäss Anspruch 3 der Formel

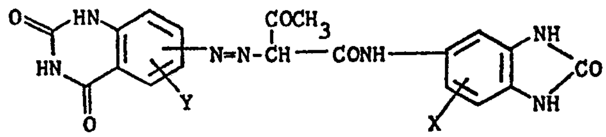

7. Azopigmente gemäss Anspruch 1, gekennzeichnet durch die Formel

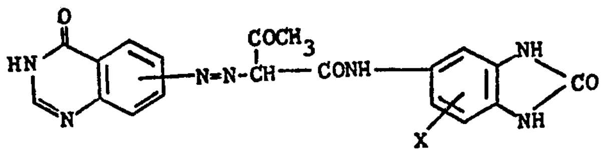

8. Azopigmente gemäss Anspruch 1, gekennzeichnet durch die Formel

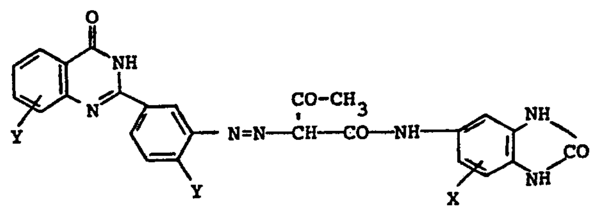

9. Verfahren zur Herstellung der Azopigmente gemäss Anspruch 1, dadurch gekennzeichnet, dass man die Diazoverbindung eines Amins der Formel

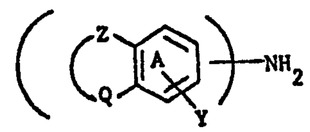

mit einem Acetessigarylid der Formel

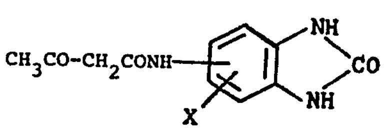

kuppelt.

10. Verfahren gemäss Anspruch 9, dadurch gekennzeichnet, dass man eine Kupplungskomponente der Formel

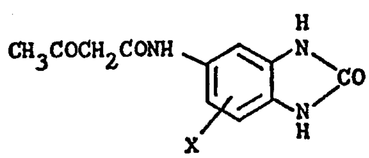

verwendet, worin X Wasserstoff, Chlor, Methyl oder Methoxy bedeutet.

11. Verfahren zum Pigmentieren von hochmolekularem organischem Material, gekennzeichnet durch die Verwendung eines Azopigments gemäss den Ansprüchen 1 bis 8.

**Claims**

1. Azo pigments of the formula

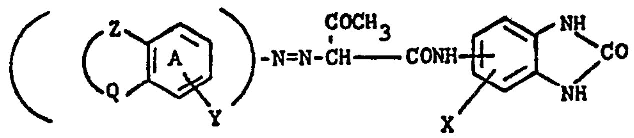

wherein X and Y are each hydrogen, halogen, alkyl or alkoxy having 1—4 C atoms, Q is a group of the formula —CONH— or —NHCO—, and Z is an O atom or is a group of the formula —NR—, —NHCO—, —CONH—, —CH=N— or

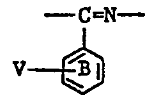

in which R is hydrogen, alkyl having 1—4 C atoms, or phenyl unsubstituted or substituted by halogen, alkyl or alkoxy having 1—4 C atoms, and V is hydrogen, halogen, alkyl or alkoxy having 1—4 C atoms, and the azo group is bound to the phenyl group A or B.

2. Azo pigments according to Claim 1 of the formula

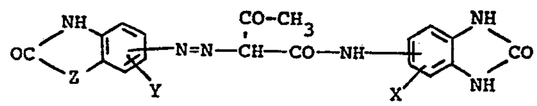

wherein Z is an O atom or a group of the formula —NH— or —NHCO—.

3. Azo pigments according to Claim 2, where, in the given formula, X is hydrogen, chlorine, methyl or methoxy, and Y is hydrogen, chlorine, methyl, methoxy or ethoxy.

4. Azo pigments according to Claim 3 of the formula

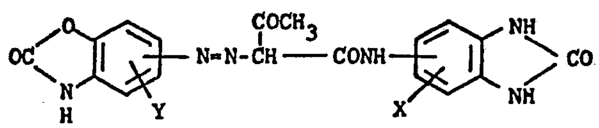

5. Azo pigments according to Claim 3 of the formula

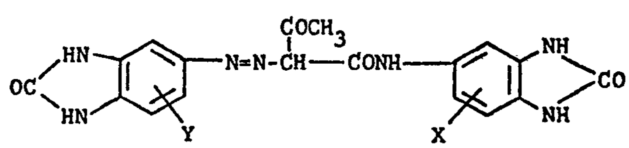

6. Azo pigments according to Claim 3 of the formula

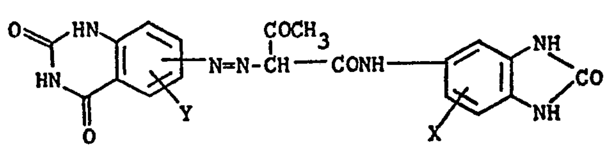

7. Azo pigments according to Claim 1, characterised by the formula

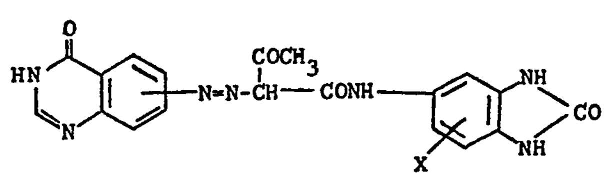

8. Azo pigments according to Claim 1, characterised by the formula

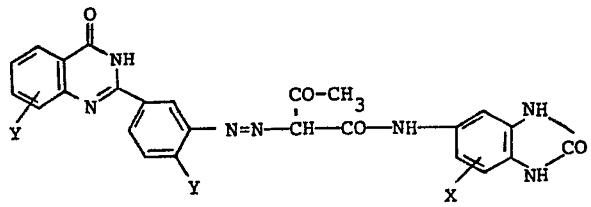

9. A process for producing the azo pigments according to Claim 1, characterised in that the diazo compound of an amine of the formula,

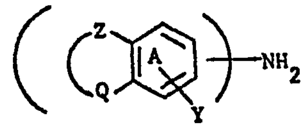

is coupled with an acetoacetic arylide of the formula

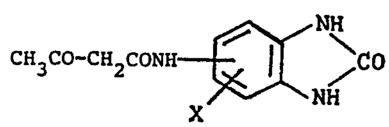

10. A process according to Claim 9, characterised in that there is used a coupling component of the formula

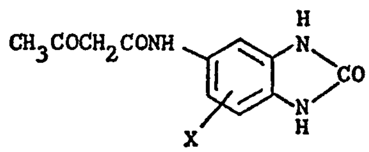

wherein X is hydrogen, chlorine, methyl or methoxy.

11. A process for pigmenting high-molecular organic material, characterised by the use of an azo pigment according to Claims 1 to 8.

**Revendications**

1. Pigments azoïques répondant à la formule

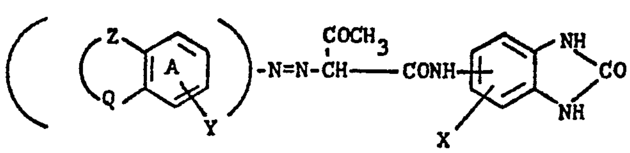

dans laquelle

X et Y représentent chacun un atome d'hydrogène ou d'halogène ou un radical alkyle ou alcoxy contenant de 1 à 4 atomes de carbone,

Q représente un groupe —CONH— ou —NHCO— et

Z représente un atome d'oxygène ou un groupe répondans à l'une des formules —NR—, —NHCO—, —CONH—, —CH=N— ou

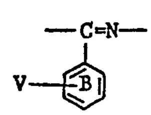

dans lesquelles R

représente un atome d'hydrogène, un radical alkyle en $C_1$—$C_4$ ou un radical phényle éventuellement porteur d'un halogène, d'un alkyle ou d'un alcoxy en $C_1$—$C_4$ et V représente un atome d'hydrogène ou

d'halogène, un alkyle ou un alcoxy en $C_1$—$C_5$, et dans laquelle le groupe azoïque est relié au radical phényle

A ou au radical phényle B.

2. Pigments azoïques selon la revendication 1 qui répondent à la formule

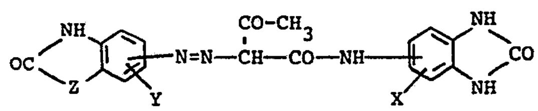

dans laquelle Z représente un atome d'oxygène ou un groupe —NH— ou —NHCO—.

3. Pigments azoïques selon la revendication 2, caractérisés en ce que, dans la formule représentée, X représente un atome d'hydrogène ou de chlore ou un radical méthyle ou méthoxy et Y représente un atome d'hydrogène ou de chlore ou un radical méthyle, méthoxy ou éthoxy.

4. Pigments azoïques selon la revendication 3 qui répondent à la formule:

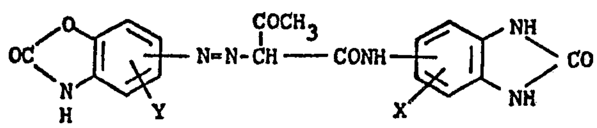

5. Pigments azoïques selon la revendication 3 qui répondent à la formule:

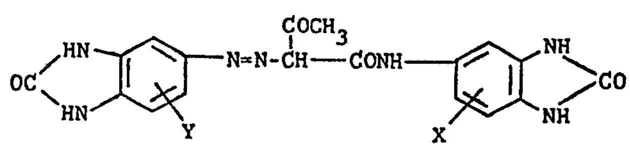

6. Pigments azoïques selon la revendication 3 qui répondent à la formule:

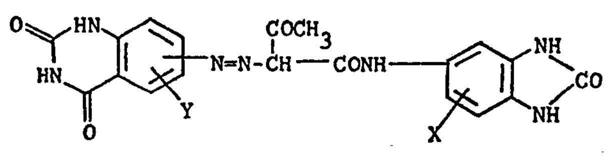

7. Pigments azoïques selon la revendication 1, caractérisés en ce qu'ils répondent à la formule:

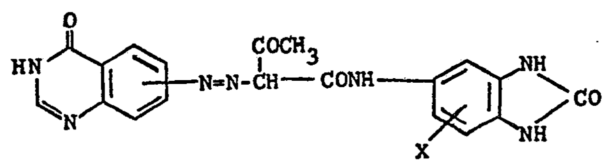

8. Pigments azoïques selon la revendication 1, caractérisés en ce qu'ils répondent à la formule:

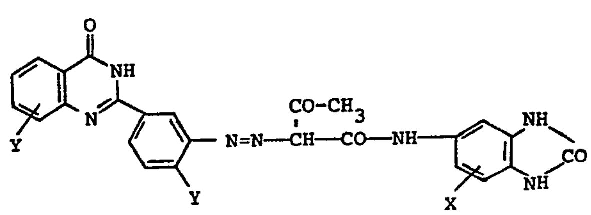

9. Procédé de préparation des pigments azoïques selon la revendication 1, caractérisé en ce qu'on copule le diazoïque d'une amine de formule

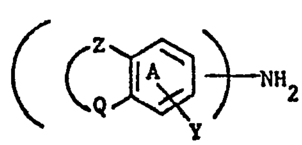

avec un acéto-acétylarylide de formule

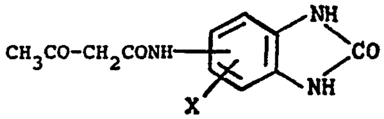

10. Procédé selon la revendication 9, caractérisé en ce qu'on utilise un copulant répondant à la formule

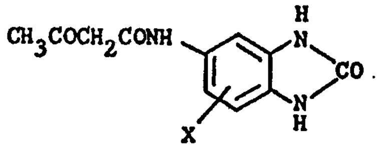

dans laquelle X représente un atome d'hydrogène ou de chlore ou un radical méthyle ou méthoxy.

11. Procédé pour pigmenter des matières organiques macromoléculaires, procédé caractérisé en ce qu'on utilise un pigment azoïque selon l'une quelconque des revendications 1 à 8.